# EUROPÄISCHE PATENTANMELDUNG

(11) **EP 4 807 472 A1**
(43) Veröffentlichungstag der Anmeldung: **16.09.2026**
(21) Anmeldenummer: 25163743.5
(22) Anmeldetag: 14.03.2025
(51) Int. Cl.: G05B 13/02, G05B 13/04, G05B 19/418

(54) **VERFAHREN UND VORRICHTUNG ZUR ADAPTIVEN STEUERUNG EINES ABSCHEIDUNGSPROZESSES**

(71) Anmelder: Robert Bosch GmbH, 70442 Stuttgart (DE)
(72) Erfinder: Podder, Itilekha, 1093 Budapest (HU)

(57) **Zusammenfassung**

Die Erfindung betrifft ein Verfahren zur adaptiven Steuerung eines Abscheidungsprozesses, vorzugsweise in Echtzeit, das Verfahren aufweisend: Bereitstellen (S1) von Sensordaten an ein physikalisch, insbesondere prozessspezifisch, informiertes maschinelles Lernmodell, PINN, (110); Generieren (S2) einer Fehlerwahrscheinlichkeit (114) auf Basis der Sensordaten (108); Bereitstellen (S3) der generierten Fehlerwahrscheinlichkeit (114) an ein Verstärkungslernmodul (118); Anpassen (S4) eines Prozessparameters (120) durch das Verstärkungslernmodul (118) auf Grundlage der generierten Fehlerwahrscheinlichkeit (114); und insbesondere kontinuierliches Optimieren (S5) des Anpassens des Prozessparameters (120) und/oder Optimieren (S5) des Generierens der Fehlerwahrscheinlichkeit (114) durch einen Feedback-Mechanismus (122) auf Basis von Messdaten (124) einer prozessintegrierten Messtechnik.

## Beschreibung

Die Erfindung betrifft ein Verfahren und eine Vorrichtung zur adaptiven Steuerung eines Abscheidungsprozesses.

### Stand der Technik

Die vorliegende Erfindung befasst sich mit Herausforderungen hinsichtlich Qualität und Defekten in Dünnschichtabscheidungsprozessen innerhalb der Halbleiterfertigung. In modernen Produktionsprozessen von Halbleiterbauelementen sind Verfahren wie die chemische Gasphasenabscheidung (Chemical Vapor Deposition, CVD) und die physikalische Gasphasenabscheidung (Physical Vapor Deposition, PVD) essenziell für den Aufbau von Schichten auf Wafern. Allerdings führen Schwankungen in den Abscheidungsbedingungen, darunter Temperatur, Gasfluss und Kammerdruck, häufig zu Defekten wie ungleichmäßiger Schichtdicke, Oberflächenrauigkeit und Spannungsrissen. Solche Defekte haben direkte Auswirkungen auf die elektrische Leistungsfähigkeit der hergestellten Bauelemente und können die Produktionsausbeute erheblich reduzieren, was wiederum zu kostspieligem Nacharbeiten und Materialverschwendung führt.

Die Sicherstellung einer hohen Qualität der abgeschiedenen Dünnschichten wird insbesondere im Zuge der Miniaturisierung von Halbleiterbauelementen immer wichtiger. Mit kleineren Strukturgrößen steigen die Anforderungen an Präzision und Reproduzierbarkeit der Abscheidungsprozesse, wodurch selbst geringfügige Defekte eine erhebliche Auswirkung auf die Funktionalität der Bauelemente haben können. Die zunehmende Komplexität und Variabilität der Herstellungsprozesse stellt bestehende Qualitätskontrollsysteme vor neue Herausforderungen und erfordert intelligentere, adaptive Methoden zur Prozessüberwachung und - optimierung.

Zur Sicherstellung der Qualität in der Dünnschichtabscheidung werden in der Halbleiterindustrie verschiedene Methoden eingesetzt, darunter statistische Prozesskontrolle (Statistical Process Control, SPC), physikbasierte Simulationen und datengetriebene maschinelle Lernmodelle. Jede dieser Methoden hat spezifische Stärken, weist jedoch auch erhebliche Einschränkungen auf.

Statistische Prozesskontrolle wird weit verbreitet zur Überwachung und Kontrolle von Prozessparametern eingesetzt. Dabei werden Echtzeit-Daten mit vordefinierten Kontrollgrenzen verglichen, um Abweichungen frühzeitig zu erkennen. Beispielsweise kann der Gasfluss oder die Temperatur während der Abscheidung überwacht werden, um Warnmeldungen bei Überschreitung der zulässigen Werte auszugeben. Allerdings ist diese Methode reaktiv, greift erst nach Auftreten einer Abweichung ein und ist nicht in der Lage, dynamische Echtzeit-Anpassungen vorzunehmen. Zudem können komplexe Wechselwirkungen zwischen Prozessparametern nicht erfasst werden, wodurch Defekte möglicherweise unentdeckt bleiben.

Physikbasierte Simulationen werden häufig genutzt, um die Dynamik der Abscheidungsprozesse unter bestimmten Bedingungen zu modellieren. Sie basieren auf physikalischen Prinzipien wie Gasdiffusion, Reaktionskinetik und Wärmeübertragung, um Vorhersagen über die Schichtqualität zu treffen. Methoden wie Molekulardynamik-Simulationen oder Monte-Carlo-Verfahren werden eingesetzt, um das Schichtwachstum unter verschiedenen Prozessbedingungen zu analysieren. Während diese Modelle wertvolle Erkenntnisse für die Prozessentwicklung liefern, sind sie aufgrund ihres hohen Rechenaufwands und der erforderlichen Vereinfachungen meist ungeeignet für den Echtzeit-Einsatz in der Fertigung. Darüber hinaus reagieren sie nur schlecht auf unerwartete Veränderungen in der Produktionsumgebung.

Künstliche Intelligenz und maschinelles Lernen werden zunehmend zur Qualitätsprognose, Fehlererkennung und vorausschauenden Wartung in der Halbleiterfertigung eingesetzt. Solche Modelle nutzen historische Defektdaten und Sensormessungen, um Muster zu identifizieren und zukünftige Defekte vorherzusagen. Allerdings fehlt datengetriebenen Modellen häufig eine physikalische Grundlage, wodurch ihre Verlässlichkeit bei neuen oder variierenden Prozessbedingungen eingeschränkt ist. Zudem mangelt es diesen Modellen oft an Interpretierbarkeit, sodass Prozessingenieure die getroffenen Vorhersagen nur schwer nachvollziehen können. Dies stellt in der hochsensiblen Halbleiterfertigung ein erhebliches Problem dar, da nachvollziehbare und erklärbare Entscheidungen unerlässlich sind.

Die fortschreitende Miniaturisierung von Halbleiterbauelementen auf Strukturgrö-ßen unterhalb von 10 Nanometern stellt neue Anforderungen an die Prozesskontrolle in der Dünnschichtabscheidung. Angesichts der zunehmenden Sensitivität von Halbleiterschichten gegenüber kleinsten Prozessabweichungen ist eine präzise Echtzeit-Kontrolle erforderlich. Bestehende Lösungen sind nicht in der Lage, sich dynamisch an Veränderungen während des Abscheidungsprozesses anzupassen, was zu unerkannten Defekten und Produktionsausfällen führt.

In der Halbleiterfertigung sind interpretierbare Modelle essenziell, da Ingenieure verstehen müssen, warum ein bestimmtes Prozessverhalten zu einer bestimmten Vorhersage oder Anpassung führt. Rein datengetriebene maschinelle Lernmodelle bieten oft eine undurchsichtige Lösung ohne transparente Entscheidungsfindung. Dies macht sie unpraktisch für Hochpräzisionsanwendungen, in denen nachvollziehbare Optimierungsentscheidungen erforderlich sind.

Halbleiterfertigungsstätten sind hochdynamische Umgebungen, in denen Faktoren wie Maschinenverschleiß, schwankende Umweltbedingungen und unterschiedliche Materialeigenschaften Einfluss auf die Prozesse nehmen. Traditionelle Methoden setzen stabile Bedingungen voraus und haben daher Schwierigkeiten, sich an variable Produktionsszenarien anzupassen.

Die genannten Einschränkungen bestehender Methoden haben erhebliche Konsequenzen für die Halbleiterindustrie. Da Defekte oft erst spät erkannt werden, entstehen hohe Kosten durch Ausschuss, Nachbearbeitung und ineffiziente Materialnutzung. Dies senkt die Gesamtausbeute und führt zu finanziellen Verlusten. Zudem erschwert die mangelnde Echtzeit-Vorhersagefähigkeit aktueller Methoden eine proaktive Wartung, was zu häufigeren Maschinenstillständen und Produktionsunterbrechungen führt.

Mit der Einführung neuer Materialien und Strukturdesigns steigt der Bedarf an flexiblen Optimierungsmethoden. Die fehlende Anpassungsfähigkeit bestehender Lösungen erschwert jedoch eine schnelle und effiziente Prozesskalibrierung. Die beschriebenen Herausforderungen verdeutlichen die bestehenden Defizite der aktuellen Methoden in der Dünnschichtabscheidung und deren weitreichende Auswirkungen auf die Produktionsqualität und Wirtschaftlichkeit in der Halbleiterfertigung.

Es ist eine Aufgabe der Erfindung, ein verbessertes Verfahren und/oder eine verbesserte Vorrichtung anzugeben.

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 10.

### Offenbarung der Erfindung

Gemäß einem ersten Aspekt wird ein Verfahren zur adaptiven Steuerung eines Abscheidungsprozesses vorgeschlagen. Das Verfahren umfasst vorzugsweise ein Bereitstellen von Sensordaten an ein physikalisch, insbesondere prozessspezifisch, informiertes maschinelles Lernmodell, PINN; ein Generieren einer Fehlerwahrscheinlichkeit auf Basis der Sensordaten; ein Bereitstellen der generierten Fehlerwahrscheinlichkeit an ein Verstärkungslernmodul; ein Anpassen eines Prozessparameters durch das Verstärkungslernmodul auf Grundlage der generierten Fehlerwahrscheinlichkeit; und ein, insbesondere kontinuierliches Optimieren des Anpassens des Prozessparameters und/oder Optimieren des Generierens der Fehlerwahrscheinlichkeit durch einen Feedback-Mechanismus auf Basis von Messdaten einer prozessintegrierten Messtechnik.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird eine Vorrichtung zur adaptiven Steuerung eines Abscheidungsprozesses vorgeschlagen, wobei die Vorrichtung eine Auswerte- und Recheneinrichtung aufweist, die dazu ausgebildet ist, die folgenden Schritte auszuführen: ein Bereitstellen von Sensordaten an ein physikalisch, insbesondere prozessspezifisch, informiertes maschinelles Lernmodell, PINN; ein Generieren einer Fehlerwahrscheinlichkeit auf Basis der Sensordaten; ein Bereitstellen der generierten Fehlerwahrscheinlichkeit an ein Verstärkungslernmodul; ein Anpassen eines Prozessparameters durch das Verstärkungslernmodul auf Grundlage der generierten Fehlerwahrscheinlichkeit; und ein, insbesondere kontinuierliches Optimieren des Anpassens des Prozessparameters und/oder Optimieren des Generierens der Fehlerwahrscheinlichkeit durch einen Feedback-Mechanismus auf Basis von Messdaten einer prozessintegrierten Messtechnik.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Die vorgeschlagene Lösung schlägt ein physikinformiertes maschinelles Lernmodell, insbesondere ein neuronales Netzwerk, (PINN) vor, das insbesondere jedoch nicht einschränkend für die adaptive Echtzeitsteuerung in Dünnschichtabscheidungsprozessen entwickelt ist. Das PINN kombiniert die Flexibilität des maschinellen Lernens mit physikalischen Einschränkungen, die beispielsweise der Dynamik des Dünnschichtwachstums innewohnen, wie z. B. Diffusion, Reaktionskinetik und Spannungs-Dehnungs-Beziehungen. Durch die Nutzung eines physikinformierten neuronalen Netzwerks (PINN) integriert das System diese physikalischen Prinzipien direkt in das Lernmodell und ermöglicht so genaue, physikalisch fundierte Vorhersagen über die Fehlerwahrscheinlichkeit, während es sich vorzugsweise kontinuierlich an Echtzeitänderungen der Prozessparameter anpasst. Die Modellarchitektur umfasst dabei vorzugsweise drei Kernkomponenten. Einerseits das physik-informierte maschinelle Lernmodell (PINN), welches vorzugsweise maßgebliche Prozessgleichungen, insbesondere Ablagerungsgleichungen erhält, und sicherstellt, dass die Vorhersagen somit die grundlegenden Gesetze des Materialverhaltens unter verschiedenen Bedingungen berücksichtigen. Das Verstärkungslernmodul RL, das auch als RL-Controller oder als RL-Regler bezeichnet wird, optimiert vorzugsweise kontinuierlich Prozessparameter, insbesondere Ablagerungsparameter wie Gasfluss, Temperatur und/oder Druck, auf der Grundlage der Echtzeit-Fehlerprognosen des PINNs. Das System überwacht aktiv Sensordaten und ermöglicht so, insbesondere sofortige, Korrekturmaßnahmen, um die Prozessstabilität aufrechtzuerhalten und Fehler präventiv zu verhindern, insbesondere bevor sie auftreten. Dies erfolgt durch eine Echtzeitüberwachung und durch eine darauf basierende Feedback-Schleife.

Die Erfindung beschreibt ein hybrides Verfahren und eine Vorrichtung, das/die ein physikalisch informiertes neuronales Netzwerk (PINN) und Reinforcement Learning (RL) zur Echtzeit Optimierung einer Dünnschichtabscheidung nutzt. Dies adressiert die Grenzen der derzeitigen Methoden (statistische Prozesskontrolle, physikbasierte Simulationen und datengesteuerte Modelle des maschinellen Lernens), die entweder rechenaufwendig bzw. dadurch teuer sind, oder denen die physikalische Grundlage und somit das damit einhergehende Verständnis fehlt. Das PINN integriert die physikalischen Gesetze des Dünnschichtwachstums direkt in das neuronale Netz, was genaue und interpretierbare Fehlervorhersagen ermöglicht. Ein RL-Controller nutzt diese Vorhersagen dann vorzugsweise, um Abscheidungsparameter in Echtzeit anzupassen, wodurch ein geschlossener Regelkreis innerhalb des Systems entsteht. Die vorgeschlagene Lösung bietet somit ein physikinformiertes neuronales Netz (PINN), das eine adaptive Echtzeitsteuerung in Dünnschichtabscheidungsprozessen in der Halbleiterfertigung ermöglicht. Dieses System integriert physikinformierte neuronale Netze (PINNs) mit verstärkendem Lernen (RL) und erstellt so ein Modell, das sowohl eine hohe Genauigkeit bei der Fehlerprognose als auch eine dynamische Parameteranpassung ermöglicht.

Die Erfindung behebt dabei mehrere Einschränkungen aktueller Lösungen. Im Gegensatz zu SPC und statischen Simulationen bietet die vorliegende Lösung eine Echtzeit-adaptive Kontrolle, bei der Prozessparameter dynamisch angepasst werden können, um Fehler zu vermeiden, anstatt erst zu reagieren, nachdem derartige Fehler aufgetreten sind. Durch die Einbettung physikalischer Prinzipien in das Modell liefert PINN zudem ein interpretierbares Vorhersagen und überwindet die "Black-Box"-Einschränkungen der traditionellen maschinellen Lernmodelle. Diese Interpretierbarkeit ermöglicht es zudem Ingenieuren, Modellempfehlungen zu verstehen und somit den Modelleinschätzungen zu vertrauen. Durch die Integration physikalischer Beschränkungen, die direkt in das maschinelle Lernmodell einfließen, kann dieses besser auf unterschiedliche Materialien, Umgebungsbedingungen und/oder Gerätezustände angewendet werden, wodurch der Bedarf an Nachschulungen verringert und die Robustheit in komplexen, variablen Fertigungsumgebungen verbessert wird.

Diese Erfindung ist insbesondere in der Halbleiterfertigung vielseitig einsetzbar, da sie dazu beiträgt, die Fehlerquote zu senken, die Ausbeute zu erhöhen und die Kosten für Nacharbeiten und Ausschuss zu senken. Die Integration physikalischer Prinzipien liefert zudem vorzugsweise umsetzbare Erkenntnisse für Verfahrenstechniker, während die Echtzeit-Anpassungsfähigkeit eine optimale Beschichtungsqualität auch in hochdynamischen Produktionsumgebungen gewährleistet. Durch die Überbrückung der Kluft zwischen maschinellem Lernen und physikalischem Verständnis bietet diese Lösung eine robuste, interpretierbare und skalierbare Methode zur Erzielung einer präzisen Dünnschichtabscheidung, die für die Erfüllung der hohen Standards moderner Halbleiterbauelemente von entscheidender Bedeutung ist.

Im Gegensatz zu herkömmlichen neuronalen Netzen, die ausschließlich auf Daten basieren, binden PINNs vorzugsweise physikalische Gesetze, wie Diffusion, Reaktionskinetik und Spannungs-Dehnungs-Beziehungen, in die Architektur des neuronalen Netzes ein. Durch diese Einbettung kann das Modell vorzugsweise Vorhersagen treffen, die nicht nur datengesteuert sind, sondern auch durch wissenschaftliche Prinzipien der Dünnschichtabscheidung eingeschränkt werden.

Durch die Durchsetzung dieser physikalischen Gesetze innerhalb des Lernprozesses kann das PINN vorzugsweise die Fehlerwahrscheinlichkeit und die Filmeigenschaften (z. B. Gleichmäßigkeit, Dicke) unter sich ändernden Prozessbedingungen vorhersagen und gleichzeitig sicherstellen, dass die Ergebnisse physikalisch realistisch bleiben.

Reinforcement Learning (RL) fungiert im vorliegenden Zusammenhang vorzugsweise als Entscheidungsmechanismus. Die RL-Komponente erhält vorzugsweise kontinuierlich Input von den Fehlerprognosen des PINN und bestimmt insbesondere optimale Anpassungen für wichtige Abscheidungsparameter (wie Gasdurchflussrate, Temperatur und/oder Druck). Durch die Optimierung dieser Parameter in Echtzeit stellt der RL-Controller sicher, dass der Abscheidungsprozess innerhalb der gewünschten Spezifikationen bleibt, wodurch die Wahrscheinlichkeit von Fehlern minimiert wird. Zusammen bilden der PINN und der RL-Controller ein geschlossenes Rückkopplungssystem, das sich vorzugsweise kontinuierlich an Echtzeitschwankungen anpasst und proaktive Anpassungen vornimmt, um Fehler zu verhindern, bevor sie auftreten.

Dieses PINN-basierte System stellt eine Kombination aus Anpassungsfähigkeit des maschinellen Lernens und physikalischer Realitätsnähe dar und ermöglicht im Gegensatz zu herkömmlichen rein statistischen oder rein physikbasierten Modellen eine kontinuierliche Echtzeit-Anpassung der Ablagerungsparameter, wodurch Fehler proaktiv minimiert werden. Der RL-Controller stellt vorzugsweise sicher, dass der Abscheidungsprozess durch das Lernen aus jeder Anpassung optimiert bleibt, und sorgt so für Stabilität und hohe Ausbeute auch in schwankenden Produktionsumgebungen.

Dieser Ansatz stellt einen Fortschritt in der Halbleiterfertigung dar und bietet eine robuste, skalierbare Lösung zur Erreichung der strengen Qualitäts- und Ertragsstandards, die in der modernen Dünnschichtabscheidung erforderlich sind.

Die gemäß dem vorliegenden Verfahren vorgeschlagene Modellarchitektur wird vorliegend auch als "PINN-System" bezeichnet.

Das PINN-System kann die Fehlervermeidung in Echtzeit verbessern, die Ausbeute erhöhen und die Ausfallzeiten in den Halbleiterfabriken reduzieren. Dies bietet Vorteile für Qualitätssicherungsteams, die sich auf die Fehlerminimierung konzentrieren, und Prozesssteuerungsexperten, die für die Aufrechterhaltung hoher Standards in den fortschrittlichen Fertigungsanlagen verantwortlich sind. Die adaptive Steuerung und das geschlossene Regelkreissystem des PINN-Systems sind ferner für das Echtzeit-Qualitätsmanagement und die dynamische Prozessoptimierung von Nutzen. Experten für maschinelles Lernen und physikbasierte Modellierung sowie Teams, die KI-Lösungen der nächsten Generation für industrielle Anwendungen entwickeln, haben ebenfalls Vorteile aus dem vorliegenden Verfahren. Diese Gruppen könnten die physikbasierten Modellierungs- und Verstärkungslernfähigkeiten des PINN-Systems nutzen, um Anwendungen jenseits der Halbleiterfertigung zu erforschen, wie z. B. die adaptive Steuerung in der Fertigung von Automobilkomponenten oder die vorausschauende Wartung.

Die Sensordaten werden vorzugsweise über eine Datenerfassungsschicht bereitgestellt. Dabei sammelt das System vorzugsweise Echtzeitdaten von In-situ-Sensoren, die Parameter wie Gasfluss, Temperatur, Kammerdruck und Schichtdicke messen. Diese Sensordaten fließen dann vorzugsweise in das PINN ein und liefern ein aktuelles "Bild bzw. einen Eindruck" der Bedingungen des Abscheidungsprozesses. Das PINN empfängt dabei die Sensordaten vorzugsweise als Eingaben und verwendet Schichten, die physikalische Gleichungen, wie Diffusions-Advektions-Gleichungen und/oder Arrhenius-basierte chemische Kinetik, als Beschränkungen innerhalb des Netzwerks umfassen. Das PINN gibt als Ausgabe Vorhersagen über die Fehlerwahrscheinlichkeit, insbesondere hinsichtlich Film-Qualitätsmetriken (z. B. Gleichmäßigkeit und Dicke) und/oder potenzielle Abweichungen von den gewünschten Spezifikationen, aus. Die Verlustfunktion des PINNs ist vorzugsweise derart angepasst, dass Vorhersagefehler minimiert werden, während die Einhaltung physikalischer Gesetze durchgesetzt wird, was zu zuverlässigen und physikalisch interpretierbaren Vorhersagen führt.

Der Reinforcement Learning (RL) Regler passt vorzugsweise Abscheidungsparameter wie Temperatur, Gasdurchfluss und Druck an und nutzt dabei die Vorhersagen des PINNs als Leitfaden für Echtzeitaktionen. Die Belohnungsfunktion des RL-Reglers ist darauf ausgelegt, die Fehlerwahrscheinlichkeit und/oder Parameterschwankungen zu minimieren und so stabile und optimale Abscheidungsbedingungen zu gewährleisten. Durch kontinuierliches Lernen aus dem Feedback, das durch angepasste Parameter und neue Sensordaten bereitgestellt wird, passt sich der RL-Regler vorzugsweise fortlaufend an Veränderungen, wie z. B. Geräteverschleiß oder Schwankungen der Kammerbedingungen, in der Beschichtungsumgebung an. Das PINN-System bildet einen geschlossenen Feedback-Mechanismus, bei dem auf Basis von Echtzeitdaten Vorhersagen getroffen werden, auf deren Basis wiederum Anpassungen gesteuert werden können. Diese Feedback-Schleife wird vorzugsweise kontinuierlich aktualisiert und ermöglicht eine proaktive Fehlervermeidung. Die Feedback-Schleife ist so konzipiert, dass sie die Prozessstabilität verbessert und die Schichtqualität unter variablen Bedingungen aufrechterhält.

In einem weiteren Aspekt wird vorgeschlagen, dass das physikalisch informierte maschinelle Lernmodell auf Basis von Ablagerungsgleichungen des Abscheidungsprozesses, insbesondere durch Diffusionsgleichungen und/oder eine Reaktionskinetik und/oder Spannungs-Dehnungs-Beziehungen, informiert ist.

Das physikalisch informierte maschinelle Lernmodell berücksichtigt vorzugsweise die zugrunde liegenden physikalischen Prozesse der Dünnschichtabscheidung, um präzisere und realitätsnahe Vorhersagen zu ermöglichen. Vorzugsweise basiert das Modell auf mathematischen Beschreibungen der Materialablagerung, die die wesentlichen Mechanismen des Abscheidungsprozesses erfassen. Vorzugsweise werden dabei Diffusionsgleichungen verwendet, um die Verteilung von Partikeln innerhalb der Schicht und deren Transportverhalten während der Abscheidung zu modellieren. Vorzugsweise spielen auch reaktionskinetische Modelle eine Rolle, um die chemischen Umwandlungen und Wechselwirkungen zwischen Prozessgasen und Substrat zu beschreiben. Vorzugsweise werden zusätzlich Spannungs-Dehnungs-Beziehungen einbezogen, um mechanische Effekte innerhalb der abgeschiedenen Schicht, wie Spannungsbildung oder Rissbildung, vorherzusagen. Vorzugsweise ermöglicht diese physikalische Grundlage eine genauere Anpassung der Modellparameter an reale Prozessbedingungen, wodurch Vorhersagen nicht nur datenbasiert, sondern auch durch etablierte wissenschaftliche Prinzipien gestützt werden. Vorzugsweise verbessert dies die Modellrobustheit und verringert die Notwendigkeit umfangreicher Trainingsdatensätze für verschiedene Prozessvariationen. Vorzugsweise sorgt diese Kombination aus physikalischen Gleichungen und maschinellem Lernen für eine höhere Verlässlichkeit und Stabilität der Vorhersagen in unterschiedlichen Abscheidungsumgebungen.

In einem weiteren Aspekt wird vorgeschlagen, dass die Messdaten Metrologiedaten des Abscheidungsprozesses, insbesondere Daten über eine Schichtdicke und/oder eine Gleichmäßigkeit der Abscheidung, aufweisen.

Die Messdaten umfassen vorzugsweise Metrologiedaten, die eine präzise Analyse des Abscheidungsprozesses ermöglichen. Vorzugsweise umfassen diese Daten Informationen zur Schichtdicke, um sicherzustellen, dass die aufgebrachte Schicht den gewünschten Spezifikationen entspricht. Vorzugsweise wird auch die Gleichmäßigkeit der Abscheidung erfasst, um Variationen innerhalb der abgeschiedenen Schicht zu identifizieren und zu minimieren. Vorzugsweise dienen diese Metrologiedaten als Grundlage für die Bewertung der Prozessstabilität und zur Optimierung der Abscheidungsparameter. Vorzugsweise ermöglichen sie eine frühzeitige Erkennung von Abweichungen, die zu Defekten oder unerwünschten Materialeigenschaften führen könnten. Vorzugsweise werden die erfassten Daten kontinuierlich überwacht und in das System integriert, um eine adaptive Steuerung des Abscheidungsprozesses zu ermöglichen. Vorzugsweise tragen diese Messwerte dazu bei, die Qualität der abgeschiedenen Schichten zu verbessern und die Prozesszuverlässigkeit zu erhöhen. Die Echtzeit-Sensordaten von Inline-Sensoren werden vorzugsweise nicht nur zur Vorhersage und Vermeidung von Fehlern verwendet, sondern auch zur direkten Rückmeldung über die Wirksamkeit von RL-gesteuerten Parameteranpassungen. Damit kann auf Umweltschwankungen, Geräteverschleiß und/oder andere dynamische Veränderungen reagiert und so eine konsistente Prozesssteuerung ohne ständige Neukalibrierung gewährleistet werden.

In einem weiteren Aspekt wird vorgeschlagen, dass der Prozessparameter einen Gasfluss und/oder eine Temperatur und/oder einen Druck und/oder Modellgewichte aufweist.

Der Prozessparameter umfasst vorzugsweise wesentliche Steuergrößen, die die Bedingungen während der Dünnschichtabscheidung beeinflussen. Vorzugsweise gehört der Gasfluss zu diesen Parametern, da er die Menge und Geschwindigkeit der Prozessgase bestimmt, die für die chemische oder physikalische Ablagerung des Materials erforderlich sind. Vorzugsweise wird auch die Temperatur berücksichtigt, da sie maßgeblich die Reaktionskinetik und Materialeigenschaften beeinflusst. Vorzugsweise spielt der Druck eine wichtige Rolle, da er das Verhalten der Prozessgase und deren Wechselwirkungen mit dem Substrat steuert. Vorzugsweise umfassen die Prozessparameter zudem Modellgewichte, die in einem lernfähigen System angepasst werden können, um die Präzision der Vorhersagen und Steuerungen zu optimieren. Vorzugsweise ermöglichen diese Parameter eine flexible und adaptive Anpassung des Abscheidungsprozesses, wodurch eine gleichmäßige Schichtqualität sichergestellt und Defekte minimiert werden können. Vorzugsweise werden diese Variablen kontinuierlich überwacht und gegebenenfalls dynamisch angepasst, um eine optimale Prozessführung zu gewährleisten. Für eine möglichst optimale Leistung werden vorzugsweise bestimmte Schlüsselparameterwerte auf der Grundlage empirischer Daten und physikalischer Einschränkungen optimiert. Der Bereich für die optimale Gasflussrate variiert je nach Prozess, wird jedoch vorzugsweise innerhalb von ±5 % der Grundrate gehalten (z. B. 300 SCCM ±15 SCCM). Geringfügige Anpassungen helfen bei der Steuerung der Abscheidungsrate, ohne den Prozess zu destabilisieren. Optimale Temperaturanpassungen sind vorzugsweise auf ±3 °C vom Zielwert begrenzt, um eine minimale Störung der chemischen Reaktionsdynamik innerhalb der Abscheidungskammer zu gewährleisten. Die Feedbackschleife sollte vorzugsweise mit einer Frequenz arbeiten, die die Reaktionszeit minimiert, besonders bevorzugt innerhalb eines Intervalls von 1 bis 2 Sekunden, um so möglichst schnelle Anpassungen zu gewährleisten, ohne das System zu überlasten. Die während des PINN-Trainings verwendete Verlustfunktion umfasst vorzugsweise Gewichte, um die Genauigkeit der Fehlerprognose mit der physikalischen Konsistenz in Einklang zu bringen. Ein typisches Gewichtsverhältnis für Vorhersagefehler und physikalische Einschränkungen könnte vorzugsweise 70:30 sein, um eine robuste Einhaltung physikalischer Gesetze zu gewährleisten und gleichzeitig die Genauigkeit zu priorisieren.

In einem weiteren Aspekt wird vorgeschlagen, dass das Anpassen des Prozessparameters auf Basis eines vorbestimmten Schwellenwertes für die Fehlerwahrscheinlichkeit erfolgt.

Eine mögliche Fehlerwahrscheinlichkeitsschwelle (DEFECT_THRESHOLD) wird in der Regel auf 0,05 (5 %) gesetzt, um Parameteranpassungen einzuleiten, wenn das Fehlerrisiko diesen Wert überschreitet.

In einem weiteren Aspekt wird vorgeschlagen, dass das PINN Schichten aufweist, die physikalische Gleichungen als Beschränkungen innerhalb des PINNs einführen.

Das PINN umfasst vorzugsweise mehrere Schichten, die physikalische Gleichungen als integrale Beschränkungen in das Modell einbinden. Vorzugsweise dienen diese Schichten dazu, die zugrunde liegenden physikalischen Gesetzmäßigkeiten der Dünnschichtabscheidung direkt in die Architektur des neuronalen Netzes zu integrieren. Vorzugsweise werden physikalische Gleichungen wie Diffusions- oder Reaktionskinetik-Gleichungen in das PINN aufgenommen, um sicherzustellen, dass die Vorhersagen des Modells mit realen physikalischen Prozessen übereinstimmen. Vorzugsweise verbessern diese Beschränkungen die Generalisierungsfähigkeit des Modells, indem sie es ermöglichen, auch mit begrenzten Trainingsdaten präzise Vorhersagen zu treffen. Vorzugsweise sorgen die physikalischen Randbedingungen innerhalb der Schichten für eine höhere Modellstabilität und verhindern unphysikalische oder nicht plausible Ergebnisse. Vorzugsweise gewährleistet diese Architektur eine bessere Anpassungsfähigkeit an unterschiedliche Abscheidungsprozesse, da das Modell sowohl datengetriebene als auch physikalisch fundierte Erkenntnisse kombiniert. Vorzugsweise trägt die Einbindung physikalischer Gleichungen dazu bei, die Erklärbarkeit und Nachvollziehbarkeit der Modellentscheidungen zu verbessern, was insbesondere in hochpräzisen Fertigungsprozessen von Vorteil ist.

In einem weiteren Aspekt wird vorgeschlagen, dass das Verfahren in einem Batch-Prozess-Modus oder in einem Offline-Trainings-Modus ausgeführt wird.

Das Verfahren kann auch unterschiedliche Arten implementiert sein. Während die bevorzugte Ausführung für eine hochpräzise Echtzeitsteuerung ausgelegt ist, gibt es alternative Implementierungen, die für verschiedene Fertigungsumgebungen und/oder -ziele geeignet sein können. Beispielsweise kann das Verfahren in einem Batch-Verarbeitungsmodus ausgeführt werden. Bei dieser Implementierung arbeitet das PINN-System im Batch-Modus, bei dem Sensordaten in Stacks/Stapeln und nicht in Echtzeit verarbeitet werden. Parametereinstellungen werden dann vorzugsweise auf der Grundlage von Vorhersagen auf Stack-Ebene und nicht durch kontinuierliche Überwachung vorgenommen. Dieser Modus ist geeignet für Fabriken mit weniger strengen Fehleranforderungen oder Prozessen, bei denen Echtzeitanpassungen nicht kritisch sind. Dieser Modus reduziert den Rechenaufwand, da das PINN als auch der RL-Regler nicht in Echtzeit aktualisiert werden müssen.

Ferner kann das Verfahren in einem Offline-Training mit Echtzeit-Inferenz Modus ausgeführt werden. Dabei wird das PINN offline mit historischen Daten trainiert und dann nur für Echtzeit-Inferenz eingesetzt, ohne die RL-Richtlinie kontinuierlich zu aktualisieren. Anpassungen basieren dabei vorzugsweise auf vorab trainierten Beziehungen und verfeinern den RL-Regler nicht dynamisch. Dieser Modus verfügt über eine geringere Systemkomplexität, und ist für Umgebungen geeignet, in denen Konsistenz Vorrang vor kontinuierlichem Lernen hat. Der Modus vereinfacht zudem die Integration in bestehende Steuerungssysteme, da nur die Inferenzphase in Echtzeit arbeitet.

Die bevorzugte Ausführungsform bietet die höchste Präzision und Echtzeitsteuerung und ist somit ideal für die hochvolumige, hochpräzise Halbleiterfertigung. Alternative Implementierungen bieten Kompromisse, die es ermöglichen, das PINN-System an unterschiedliche Prozessanforderungen und/oder Rechenbeschränkungen anzupassen.

In einem weiteren Aspekt ist auch ein Steuergerät beansprucht, das in einem Fahrzeug mit einer autonomen Fahrfunktion und/oder einem Robotiksystem und/oder einer industriellen Maschine umfasst ist, und auf dem das vorliegende Verfahren in einem seiner Aspekte ausführbar ist.

In einem weiteren Aspekt ist ein Computerprogramm mit Programmcode beansprucht, um zumindest Teile des vorliegenden Verfahrens in einem seiner Aspekte auszuführen, wenn das Computerprogramm auf einem Computer ausgeführt wird. Mit anderen Worten wird ein Computerprogramm(-produkt), umfassend Befehle, die bei der Ausführung des Programms durch einen Computer diesen veranlassen, das Verfahren/die Schritte des Verfahrens in einem seiner Aspekte auszuführen.

In einem weiteren Aspekt ist ein computerlesbarer Datenträger mit Programmcode eines Computerprogramms vorgeschlagen, um zumindest Teile des vorliegenden Verfahrens in einem seiner Aspekte auszuführen, wenn das Computerprogramm auf einem Computer ausgeführt wird. Mit anderen Worten betrifft die Erfindung ein computerlesbares (Speicher-) Medium, umfassend Befehle, die bei der Ausführung durch einen Computer diesen veranlassen, das Verfahren/die Schritte des Verfahrens in einem seiner Aspekte auszuführen.

Im Folgenden wird ein Algorithmus zur Umsetzung des vorliegenden Verfahrens und zur adaptiven Steuerung für Dünnschichtabscheidung mittels PINN dargestellt.

Als Input dienen vorzugsweise Sensordaten aus dem Abscheidungsprozess, zum Beispiel Temperaturdaten, Gasdurchflussdaten, Druckdaten usw. Als Output werden vorzugsweise optimierte Abscheidungsparameter zur Minimierung der Fehlerwahrscheinlichkeit erzeugt.

Bevorzugt beginnt der Algorithmus mit einer Initialisierungsphase, in der das physikalisch-informierte neuronale Netz (PINN) initialisiert wird. Dabei dienen vorzugsweise auch historische Abscheidungsdaten, Fehlerkennzeichnungen, und/oder physikalische Einschränkungen als Input für das PINN. Als Output erhält man ein vortrainiertes PINN-Modell.

Im Trainingsprozess erfolgt ein Laden historischer Abscheidungsdaten, einschließlich Sensormesswerten (Temperatur, Druck, Gasfluss) und entsprechender Fehlerkennzeichnungen. Ferner erfolgt vorzugsweise ein Definieren physikalischer Gesetze als Einschränkungen innerhalb des neuronalen Netzwerks (z. B. Differentialgleichungen zur Modellierung von Diffusion und Reaktionskinetik). Ferner erfolgt vorzugsweise ein Trainieren des PINN unter Verwendung einer benutzerdefinierten Verlustfunktion, die die Vorhersagegenauigkeit mit der physikalischen Konsistenz in Einklang bringt. Besonders bevorzugt erfolgt auch ein Speichern des trainierten Modells zur Verwendung für die Echtzeit-Fehlerprognose. Das PINN wird vorzugsweise mit einer benutzerdefinierten Verlustfunktion trainiert, die die Genauigkeit der Fehlerprognose mit der Einhaltung physikalischer Gesetze in Einklang bringt und so die Modelltreue als auch die praktische Zuverlässigkeit gewährleistet. Diese hybride Verlustfunktion bestraft vorzugsweise Vorhersagen, die von etablierten physikalischen Prinzipien abweichen, und erhöht so die Robustheit des Modells bei unterschiedlichen Materialien und Prozessvariationen.

Ferner erfolgt vorzugsweise ein Initialisieren des Reinforcement Learning (RL)-Controllers, der als Eingaben vorzugsweise einen Aktionsraum, insbesondere anzupassende Parameter wie Gasfluss, Temperatur, Druck, und eine Belohnungsfunktion erhält. Der Aktionsraum des RL-Controllers, der mögliche Anpassungen der Prozessparameter umfasst, wird vorzugsweise definiert. Ferner wird eine Belohnungsfunktion entworfen, die die Fehlerwahrscheinlichkeit und große Parameteranpassungen bestraft und eine stabile und optimale Abscheidung belohnt. Ferner kann vorzugsweise eine anfängliche Richtlinie festgelegt werden, die als Leitfaden für die Parameteranpassungen dient. Ferner erfolgt vorzugsweise ein Definieren einer Fehlerwahrscheinlichkeitsschwelle (z. B. DEFECT_THRESHOLD = 0,05), um zu bestimmen, wann Korrekturmaßnahmen erforderlich sind.

In einem adaptiven Echtzeit-Regelkreis erfolgt dann vorzugsweise ein Wiederholen, bis der Abscheidungsprozess abgeschlossen ist. Dabei erfolgt vorzugsweise ein Sammeln von Echtzeit-Sensordaten. Im Prozess erfolgt vorzugsweise eine kontinuierliche Erfassung von Echtzeitdaten von In-situ-Sensoren, einschließlich Temperatur-, Gasdurchfluss-, Kammerdruck- und Schichtdickenmessungen.

Es erfolgt vorzugsweise eine Vorhersage der Fehlerwahrscheinlichkeit mithilfe von PINN-Eingaben auf Basis der Echtzeit-Sensordaten. Dabei werden die Echtzeit-Sensordaten in das vorab trainierte PINN eingespeist. Es erfolgt dann eine Erzeugung einer Fehlerwahrscheinlichkeitsausgabe auf der Grundlage physikalischer Einschränkungen und aktueller Prozessbedingungen. Wenn die Fehlerwahrscheinlichkeit kleiner oder gleich einem Schellenwert ist, kann vorzugsweise mit der Überwachung fortgefahren werden. Wenn die Fehlerwahrscheinlichkeit größer als der Schwellenwert ist, kann vorzugsweise die Parametereinstellung eingeleitet werden.

Die Parametereinstellung erfolgt vorzugsweise mit dem RL-Regler und wird bevorzugt bei oder ab einer hohen Fehlerwahrscheinlichkeit ausgelöst. Dabei dienen als Eingaben die aktuellen Sensordaten sowie die Fehlerwahrscheinlichkeit des PINN. Der RL-Regler erhält die hohe Fehlerwahrscheinlichkeit als Input und wertet vorzugsweise die Sensordaten aus. Unter Verwendung seiner Richtlinie schlägt der RL-Regler vorzugsweise eine möglichst optimale Anpassung für jeden steuerbaren Parameter vor (z. B. Reduzierung der Gasdurchflussrate um 5 %, Anpassung der Temperatur um -2 °C).

Diese Anpassungen werden vorzugsweise in Echtzeit auf die Beschichtungsanlage angewendet.

Ferner kann ein Beobachten und Bewerten der Ergebnisse der Anpassungen erfolgen. Dabei dienen vorzugsweise also Eingaben die angepassten Parameter und bevorzugt weitere Qualitätsmetriken aus der Inline-Inspektion. Nach der Anwendung der Anpassungen werden vorzugsweise die Ablagerungsergebnisse mithilfe von Inline-Prüf- und/oder Messdaten beobachtet (z. B. auf Filmgleichmäßigkeit, Dicke und Oberflächenqualität prüfen). Ferner kann ein Aufzeichnen erfolgen, ob die Anpassungen den oder die Fehler erfolgreich minimiert haben oder ob zusätzliche Maßnahmen erforderlich sind.

Der RL-Regler wird dann vorzugsweise basierend auf Feedback-Eingaben aktualisiert, wobei vorzugsweise angepasste Parameter und/oder ein beobachtetes Fehlerergebnis als Feedback dienen. Auf Basis des Feedbacks wird dann vorzugsweise die RL-Richtlinie verfeinert. Ferner können die Parameteranpassungen belohnt werden, die die Fehlerwahrscheinlichkeit verringert haben. Anpassungen, die mit der Fehlerentstehung verbunden sind, werden hingegen bestraft. Die Richtlinie des RL-Reglers wird dann vorzugsweise aktualisiert, um die Entscheidungsfindung in zukünftigen Zyklen zu verbessern.

Dabei werden vorzugsweise auch Protokolldaten für einen kontinuierlichen Verbesserungsprozess generiert. Hierzu dienen vorzugsweise Sensordaten, PINN-Vorhersagen, angepasste Parameter und/oder Prüfergebnisse für jeden Zyklus, die bevorzugt aufgezeichnet werden. Diese Daten werden vorzugsweise gespeichert, um das PINN- und RL-Modell im Laufe der Zeit weiter zu trainieren und zu verfeinern.

Am Ende eines Abscheidungsprozesses kann der Regelkreis die Echtzeitanpassungen abschließen. Die aktualisierten Modelle und protokollierten Daten werden dann vorzugsweise für Analysen und weitere Verbesserungen als nunmehr historische Daten gespeichert.

Das PINN wird vorzugsweise mit physikalischen Einschränkungen und historischen Daten trainiert, um genaue, physikalisch konsistente Vorhersagen zu gewährleisten, während der RL-Regler mit einer grundlegenden Richtlinie und Belohnungsfunktion initialisiert wird, um die Parameter zu optimieren. Das PINN überwacht vorzugsweise kontinuierlich Sensordaten, um die Fehlerwahrscheinlichkeit in Echtzeit vorherzusagen. Wenn die Fehlerwahrscheinlichkeit den Schwellenwert überschreitet, passt der RL-Controller vorzugsweise die Parameter dynamisch an, um das Fehlerrisiko zu minimieren. Die Prüfergebnisse liefern dann vorzugsweise ein Feedback zur Verfeinerung der RL-Richtlinie und verbessern so die Lern- und Anpassungsfähigkeit des Modells im Laufe der Zeit. Durch die Einbeziehung der Echtzeitdaten und Prüfrückmeldungen verbessert das Modell zudem kontinuierlich seine Strategien zur Fehlervermeidung und wird so robust gegenüber Prozessschwankungen.

In der Halbleiterfertigung können vorzugsweise bereits geringfügige Abweichungen in den Abscheidungsparametern erhebliche Defekte verursachen, insbesondere wenn Bauelemente auf Strukturgrößen unterhalb von 10 nm skaliert werden. Vorzugsweise beeinträchtigen solche Defekte nicht nur die Funktionalität der Bauelemente, sondern auch die Produktionsausbeute, was zu erhöhtem Ausschuss und hohen Kosten führt. Vorzugsweise werden in herkömmlichen Qualitätssicherungsmethoden wie der statistischen Prozesskontrolle (SPC) Abweichungen erst erkannt, nachdem sie bereits aufgetreten sind, was vorzugsweise zeitaufwendige Nachbearbeitung oder den Ausschuss defekter Wafer erforderlich macht.

Vorzugsweise erfasst das System kontinuierlich Echtzeitdaten von Sensoren, die Parameter wie Temperatur, Druck und Gasflussrate überwachen. Vorzugsweise analysiert das Physics-Informed Neural Network (PINN) diese Sensordaten, um die Wahrscheinlichkeit der Defektbildung vorherzusagen. Vorzugsweise greift ein Reinforcement-Learning-Controller ein, sobald das Modell eine hohe Defektwahrscheinlichkeit erkennt, und passt vorzugsweise die relevanten Prozessparameter an. Vorzugsweise können dabei geringfügige Anpassungen der Gasflussrate oder Temperatur vorgenommen werden, um die Abscheidung innerhalb akzeptabler Grenzen zu halten.

Vorzugsweise führt diese Vorgehensweise zu einer signifikanten Reduktion von Defekten und einer erhöhten Produktionsausbeute, wodurch vorzugsweise erhebliche Kosteneinsparungen erzielt werden. Vorzugsweise ist dieser Ansatz besonders vorteilhaft für Hochpräzisionsabscheidungsprozesse, da bereits minimale Schwankungen der Prozessparameter vorzugsweise Defekte verursachen können, die die Qualität der Bauelemente beeinträchtigen. Vorzugsweise ermöglicht die kontinuierliche und adaptive Prozesssteuerung eine proaktive Fehlervermeidung, wodurch vorzugsweise nicht nur Ausschuss reduziert, sondern auch die Prozessstabilität verbessert wird.

Die Einführung neuer Materialien in die Dünnschichtabscheidung erfordert vorzugsweise eine umfassende Prozessoptimierung, um hochwertige und defektfreie Schichten zu gewährleisten. Vorzugsweise stellen Materialien wie High-k-Dielektrika oder Low-k-Interconnects besondere Herausforderungen dar, da sie vorzugsweise andere Abscheidungsdynamiken aufweisen als bisher verwendete Materialien. Vorzugsweise haben herkömmliche Modelle Schwierigkeiten, sich an diese neuen Anforderungen anzupassen, da ihnen vorzugsweise die Fähigkeit zum adaptiven, echtzeitfähigen Lernen fehlt. Vorzugsweise bedeutet dies, dass bestehende Verfahren oft eine langwierige Neukalibrierung und wiederholtes Testen erfordern, bevor eine stabile und reproduzierbare Abscheidung erreicht wird.

Vorzugsweise berücksichtigt das System physikalische Randbedingungen, die für den Abscheidungsprozess entscheidend sind, wie Diffusion und Reaktionskinetik. Vorzugsweise ermöglicht diese Integration physikalischer Prinzipien eine präzisere Vorhersage der optimalen Prozessparameter, selbst bei neuartigen Materialien. Vorzugsweise optimiert das System durch kontinuierliches Lernen im Reinforcement-Learning-Controller die Abscheidungsbedingungen in Echtzeit, sodass vorzugsweise keine aufwendige Rekalibrierung oder Neuanpassung für jedes neue Material erforderlich ist.

Vorzugsweise reduziert dieser Ansatz sowohl den Zeitaufwand als auch die Kosten, die mit der Qualifizierung neuer Materialien und der Prozessoptimierung verbunden sind. Vorzugsweise können Hersteller dadurch schneller auf neue Materialien oder Bauelementarchitekturen umstellen, ohne dass umfangreiche Anpassungen notwendig sind. Vorzugsweise gewährleisten die physikalisch fundierten Vorhersagen des Systems, dass Parameteranpassungen stets mit den spezifischen Materialeigenschaften übereinstimmen, wodurch vorzugsweise eine stabile und zuverlässige Schichtqualität sichergestellt wird.

Das vorliegende Verfahren und/oder die Vorrichtung können mit vorhandenen Prozesssteuerungssystemen (PCS) eingesetzt werden. Das PINN-System kann vorzugsweise als intelligente Schicht auf vorhandenen PCS-Rahmenwerken in Fabriken dienen und bietet vorzugsweise Vorhersagefähigkeiten, die die traditionelle SPC ergänzen. Das PCS kann vorzugsweise die Erkennung von Standardabweichungen übernehmen, während das PINN-System proaktiv Parameter für Szenarien anpasst, die ein sofortiges Eingreifen erfordern. Dieser mehrschichtige Ansatz verbessert die allgemeine Prozessstabilität und -qualität.

Das vorliegende Verfahren und/oder die Vorrichtung kann/können vorzugsweise auch in einer Inline-Messtechnik und/oder in einem Inspektionssystem verwendet werden. Das PINN-System kann vorzugsweise mit Inline-Messtechnik-Tools integriert werden, durch die beispielsweise eine Foliendicke, eine Rauheit und/oder eine Gleichmäßigkeit gemessen wird. Durch die Verknüpfung von Messtechnikdaten mit der Rückkopplungsschleife des RL-Controllers kann das vorliegende System vorzugsweise auch Parameter auf der Grundlage von Echtzeit-Qualitätsmessungen dynamisch anpassen. Dies bietet eine zusätzliche Ebene der Qualitätskontrolle und stellt sicher, dass die Folien während des gesamten Produktionsprozesses den Spezifikationen entsprechen.

Das vorliegende Verfahren und/oder die Vorrichtung kann/können vorzugsweise in der Datenanalyse und/oder als vorausschauende Wartungsplattform verwendet werden. Die vom PINN-System protokollierten Daten können vorzugsweise in die Datenanalyse- und/oder in einem vorausschauenden Wartungssystem einer Fabrik eingespeist werden und liefern vorzugsweise Erkenntnisse über die Leistung der Geräte, Fehlertrends und/oder die Prozessstabilität im Laufe der Zeit. Diese Erkenntnisse können vorzugsweise für die vorbeugende Wartung genutzt werden, um die Produktivität weiter zu steigern und ungeplante Ausfallzeiten zu reduzieren.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt ein schematisches Flussdiagramm eines Ausführungsbeispiels des Verfahrens.
- Fig. 2: zeigt ein schematisches Blockdiagramm eines Ausführungsbeispiels der Vorrichtung.

In den Figuren der Zeichnungen bezeichnen gleiche Bezugszeichen gleiche oder funktionsgleiche Elemente, Bauteile oder Komponenten, soweit nichts Gegenteiliges angegeben ist.

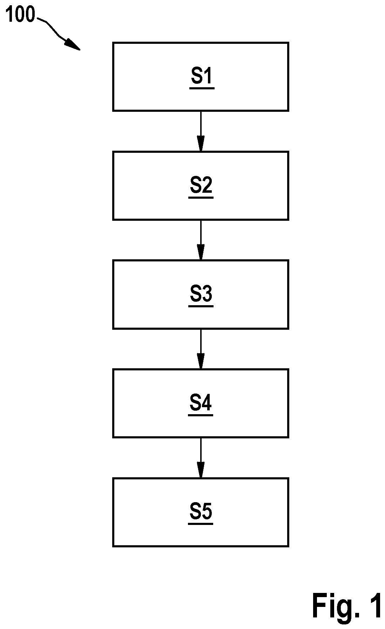

Fig. 1 zeigt ein schematisches Flussdiagramm eines Verfahrens zur adaptiven Steuerung eines Abscheidungsprozesses, vorzugsweise in Echtzeit.

Das Verfahren kann in einer beliebigen Ausführungsform zumindest teilweise durch eine Vorrichtung 100 ausgeführt werden, die hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann. Ferner kann die Vorrichtung 100, die ein Teil eines Systems sein kann, eine Speichereinrichtung und/oder eine Ausgabeeinrichtung und/oder eine Anzeigeeinrichtung und/oder eine Eingabeeinrichtung umfassen.

Das computerimplementierte Verfahren umfasst mindestens die folgenden Schritte:
In einem Schritt S1 erfolgt ein Bereitstellen von Sensordaten an ein physikalisch, insbesondere prozessspezifisch, informiertes maschinelles Lernmodell, PINN.

In einem Schritt S2 erfolgt ein Generieren einer Fehlerwahrscheinlichkeit auf Basis der Sensordaten.

In einem Schritt S3 erfolgt ein Bereitstellen der generierten Fehlerwahrscheinlichkeit an ein Verstärkungslernmodul.

In einem Schritt S4 erfolgt ein Anpassen eines Prozessparameters durch das Verstärkungslernmodul auf Grundlage der generierten Fehlerwahrscheinlichkeit.

In einem Schritt S5 erfolgt ein, insbesondere kontinuierliches, Optimieren des Anpassens des Prozessparameters und/oder Optimieren des Generierens der Fehlerwahrscheinlichkeit durch einen Feedback-Mechanismus auf Basis von Messdaten einer prozessintegrierten Messtechnik.

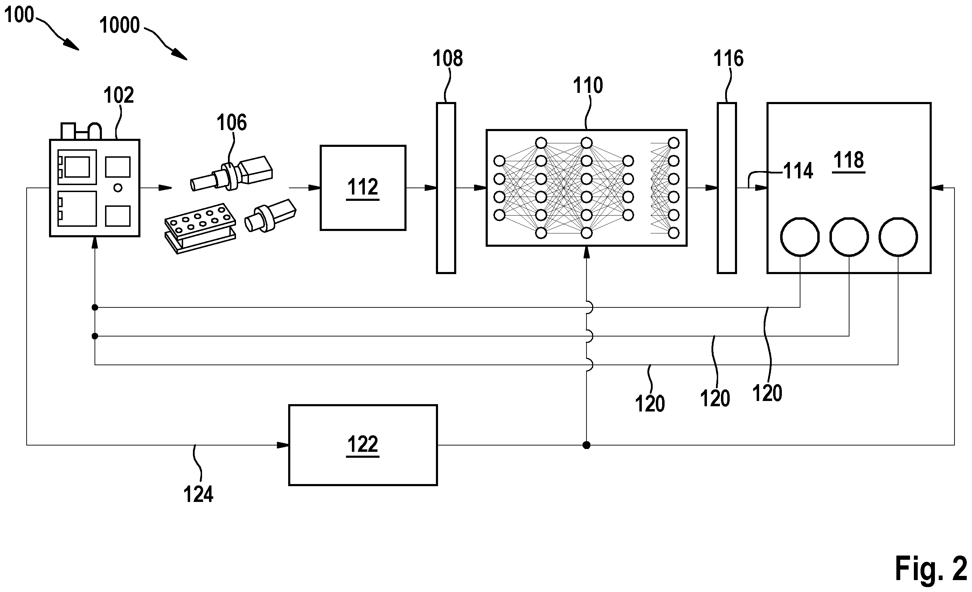

Fig. 2 zeigt eine Vorrichtung 100 in einem PINN-System 1000. Die Vorrichtung 100 zur adaptiven Steuerung eines Abscheidungsprozesses in einer Dünnfilm-Abscheidungskammer 102 weist eine Auswerte- und Recheneinrichtung 104 auf. Dabei werden beispielsweise durch Inline-Sensoren 106 Sensordaten 108 erfasst und an ein physikalisch, insbesondere prozessspezifisch, informiertes maschinelles Lernmodell, PINN, 110 bereitgestellt. Die Sensordaten 108 werden dem PINN 110 vorzugsweise über eine Sensordaten-Eingabeschicht 112 bereitgestellt. Das PINN 110 generiert dann in Echtzeit aus den Sensordaten eine Fehlerwahrscheinlichkeit 114 zu dem Abscheidungsprozess, wobei hier beispielsweise Parameter 116 wie Unstimmigkeiten in der Gleichmäßigkeit und/oder Schichtdicke des Abscheidungsprozesses analysiert werden.

Die generierte Fehlerwahrscheinlichkeit 114 wird dann an ein Verstärkungslernmodul 118 bereitgestellt, das einen Prozessparameter 120 auf Grundlage der generierten Fehlerwahrscheinlichkeit 114 anpasst. Der mindestens eine Prozessparameter 120 kann beispielsweise eine Druckanpassung und/oder eine Gasflussanpassung und/oder eine Temperaturanpassung auslösen.

Durch einen Feedback-Mechanismus 122 erfolgt, insbesondere kontinuierlich, eine Optimierung der Anpassung des mindestens einen Prozessparameters und/oder eine Optimierung der Generierung der Fehlerwahrscheinlichkeit 114 auf Basis von Messdaten 124 einer prozessintegrierten Messtechnik aus der Abscheidungskammer 102.

## Patentansprüche

1. Verfahren zur adaptiven Steuerung eines Abscheidungsprozesses, vorzugsweise in Echtzeit, das Verfahren aufweisend:
- Bereitstellen (S1) von Sensordaten an ein physikalisch, insbesondere prozessspezifisch, informiertes maschinelles Lernmodell, PINN, (110);
- Generieren (S2) einer Fehlerwahrscheinlichkeit (114) auf Basis der Sensordaten (108);
- Bereitstellen (S3) der generierten Fehlerwahrscheinlichkeit (114) an ein Verstärkungslernmodul (118);
- Anpassen (S4) eines Prozessparameters (120) durch das Verstärkungslernmodul (118) auf Grundlage der generierten Fehlerwahrscheinlichkeit (114); und
- Insbesondere kontinuierliches Optimieren (S5) des Anpassens des Prozessparameters (120) und/oder Optimieren (S5) des Generierens der Fehlerwahrscheinlichkeit (114) durch einen Feedback-Mechanismus (122) auf Basis von Messdaten (124) einer prozessintegrierten Messtechnik.

2. Verfahren nach Anspruch 1, wobei das physikalisch informierte maschinelle Lernmodell (110) auf Basis von Ablagerungsgleichungen des Abscheidungsprozesses, insbesondere durch Diffusionsgleichungen und/oder eine Reaktionskinetik und/oder Spannungs-Dehnungs-Beziehungen, informiert ist.

3. Verfahren nach Anspruch 1 oder 2, wobei die Messdaten (124) Metrologiedaten des Abscheidungsprozesses, insbesondere Daten über eine Schichtdicke und/oder eine Gleichmäßigkeit der Abscheidung, aufweisen.

4. Verfahren nach einem der vorstehenden Ansprüche, wobei der Prozessparameter (120) einen Gasfluss und/oder eine Temperatur und/oder einen Druck und/oder Modellgewichte aufweist.

5. Verfahren nach einem der vorstehenden Ansprüche, wobei das Anpassen des Prozessparameters (120) auf Basis eines vorbestimmten Schwellenwertes für die Feherwahrscheinlichkeit erfolgt.

6. Verfahren nach einem der vorstehenden Ansprüche, wobei das PINN (110) Schichten aufweist, die physikalische Gleichungen als Beschränkungen innerhalb des PlNNs (110) einführen.

7. Verfahren nach einem der vorstehenden Ansprüche, wobei das Verfahren in einem Batch-Prozess-Modus oder in einem Offline-Trainings-Modus ausgeführt wird.

8. Computerprogramm mit Programmcode, um zumindest Teile eines Verfahrens nach einem der Ansprüche 1 bis 7 auszuführen, wenn das Computerprogramm auf einem Computer ausgeführt wird.

9. Computerlesbarer Datenträger mit Programmcode eines Computerprogramms, um zumindest Teile eines Verfahrens nach einem der Ansprüche 1 bis 7 auszuführen, wenn das Computerprogramm auf einem Computer ausgeführt wird.

10. Vorrichtung (100) zur adaptiven Steuerung eines Abscheidungsprozesses, wobei die Vorrichtung (100) eine Auswerte- und Recheneinrichtung (104) aufweist, die dazu ausgebildet ist, die folgenden Schritte auszuführen:
- Bereitstellen von Sensordaten (108) an ein physikalisch, insbesondere prozessspezifisch, informiertes maschinelles Lernmodell, PINN, (110);
- Generieren einer Fehlerwahrscheinlichkeit (114) auf Basis der Sensordaten (108);
- Bereitstellen der generierten Fehlerwahrscheinlichkeit (114) an ein Verstärkungslernmodul (118);
- Anpassen eines Prozessparameters (120) durch das Verstärkungslernmodul (118) auf Grundlage der generierten Fehlerwahrscheinlichkeit (114); und
- Insbesondere kontinuierliches Optimieren des Anpassens des Prozessparameters (120) und/oder Optimieren des Generierens der Fehlerwahrscheinlichkeit (114) durch einen Feedback-Mechanismus (122) auf Basis von Messdaten (124) einer prozessintegrierten Messtechnik.
